# EUROPEAN PATENT APPLICATION

(11) **EP 2 629 394 A2**
(43) Date of publication of application: **21.08.2013**
(21) Application number: 12183544.1
(22) Date of filing: 07.09.2012
(51) Int. Cl.: H02J 7/00

(54) **Super charger**

(30) Priority: 17.02.2012 US 201261600121 P
(71) Applicant: Sony Mobile Communications AB, 221 88 Lund (SE)
(72) Inventor: Wolf, Mats, 247 35 Södra Sandby (SE); Rämmal, Jonas, 247 56 Dalby (SE)
(74) Representative: Aurell, Henrik

(57) **Abstract**

A charging device, for charging a rechargeable device, which comprises a power converter stage, adapted to convert power from a power source to charge the rechargeable device when the rechargeable device is connected to the charging device, and an energy bank, adapted for fast charging of the rechargeable device. The charging by the energy bank is independent but simultaneous to the charging of the rechargeable device by the power converter stage.

## Description

### TECHNICAL FIELD

The invention relates in general to charging devices, and more particularly, to portable charging devices for rapid charging of electronic mobile devices.

### BACKGROUND

A more rapid charging of devices having rechargeable batteries is on the top of many users wish-list. Products that today offer fast recharging is often both expensive and complex and energy density usually suffers. Furthermore, most li-ion batteries are typically mainly designed for good discharge performance while charge performance has been less prioritized.

Generally there are limitations as to what can be achieved with a given technology and in the li-ion technologies used today, in the electronics industry, the general rule is that for a discharged battery the charge-efficiency is moderately fast but towards the end of charge the current is reduced significantly (the typical charge algorithm to accommodate this is referred to as "CCCV" or constant current - constant voltage algorithm). Furthermore, the voltage profile at charging is typically such that increasing initial current during the charge process mainly leads to that the "constant-voltage" phase is reached earlier and the full power from the ac/dc adapter cannot be used effectively. For some new li-ion based battery systems with different discharge/charge characteristics, more efficient charging can be achieved when the battery has a low state-of-charge. However, most li-ion based batteries still requires low currents towards end of charge, and therefore, designing a standard charger to cope with initial high current and power is therefore inefficient in terms of materials use since the high power can only be used for a relatively short period of time, and such a solution is also very costly. Thus finding a way to provide for both the high power potential at low state-of-charge and a low power at high state-of-charge would be highly sought after.

### SUMMARY OF THE INVENTION

With the above description in mind, then, an aspect of the present invention is to provide a charging device which provide for both the high power potential at low state-of-charge and a low power at high state-of-charge, and at the same time is both simple and cost effective in its design.

The object of the present invention relates to a charging device for charging a rechargeable device. The charging device comprises a power converter stage, adapted to convert power from a power source to charge said rechargeable device when the rechargeable device is connected to the charging device. The charging device further comprises an energy bank adapted for fast charging of said rechargeable device.

A first aspect of the present invention relates to a charging device for charging a rechargeable device comprising an energy bank which is adapted for fast charging of said rechargeable device and wherein said charging by the energy bank is independent but simultaneous to the charging of the rechargeable device by the power converter stage. The effect of that the energy bank and the power converter stage independently but simultaneously charges the rechargeable device is that a charging boost is achieved. When the charging boost of the energy bank is applied to the rechargeable device in the low state-of-charge, when the charge efficiency is higher, a faster charging of the rechargeable device is achieved.

The charging device may further comprise that the energy bank is connected to the power source so that the energy bank is charged by the power source. Depending on what kind of power source the energy bank is connected to, it might be possible to charge it directly from the power source.

The charging device may further comprise that the energy bank is connected to the power converter stage so that the energy bank is charged by the power converter stage. If the power from the power source needs to be converted, e.g. from AC (Alternating Current) to DC (Direct Current), the energy bank is charged from the power converter stage.

The charging device may further comprise a short-circuit protection device, SCP device, connected to said energy bank, power converter stage and rechargeable device. The SCP device limits a charging current from the power converter stage and/or the energy bank to the rechargeable device. The charging current may need to be limited depending on the limitations of the rechargeable device. The SCP device is also used for security reasons for preventing the energy bank to accidently discharge all of its stored charge into e.g. a human body, if, for instance, the output accidently gets short-circuited (for instance touched by a finger).

The charging device may further comprise that the power converter stage continues to charge the rechargeable device when the energy bank has discharged all of its stored energy. The charging of the rechargeable device is thus continuous. The energy bank discharges all of its stored power into the rechargeable device at the same time that the power converter stage charges the rechargeable device and when the energy bank runs out, the power converter stage continues to charge.

The charging device may further comprise that the power converter stage is an AC-to-DC converter stage. If the power source is an AC-power source, the charging device needs to convert the power to DC for charging of the rechargeable device.

The charging device may further comprise that the rechargeable device is a portable device, typically a mobile phone; though the charging device will work on any kind of portable device.

The charging device may further comprise that the energy bank comprises any combination of: at least one high power battery, at least one high power battery and at least one super capacitor, or at least one super capacitor i.e. an electrochemical capacitor. The combination will depend on limits of the manufacturing cost and the desired efficiency.

The charging device may further comprise that the at least one high power battery is a rechargeable high power battery, typically a LFP (lithium-iron-phosphate) or LTO (lithium-tin-oxide) based battery.

A second aspect of the present invention relates to a method for charging a rechargeable device by means of a charging device, comprising the steps of:
- providing a power converter stage to the charging device which is adapted to convert power from a power source to charge said rechargeable device when the rechargeable device is connected to the charging device; and
- providing an energy bank to the charging device, adapted for fast charging of said rechargeable device. Said charging by the energy bank is independent but simultaneous to the charging of the rechargeable device by the power converter stage.

The effect of that the energy bank and the power converter stage independently but simultaneously charges the rechargeable device is that a charging boost is achieved. When the charging boost of the energy bank is applied to the rechargeable device in the low state-of-charge, when the charge efficiency is higher, a faster charging of the rechargeable device is achieved.

The method for charging a rechargeable device may further comprise the step of:
- connecting the energy bank to the power source so that the energy bank is charged by the power source.

Depending on what kind of power source the energy bank is connected to, it might be possible to charge it directly from the power source.

The method for charging a rechargeable device may further comprise the step of:
- connecting the energy bank to the power converter stage so that the energy bank is charged by the power converter stage.

If the power from the power source needs to be converted, e.g. from AC (Alternating Current) to DC (Direct Current), the energy bank is charged from the power converter stage.

The method for charging a rechargeable device may further comprise the step of:
- providing a short-circuit protection device, SCP device, to the charging device. The SCP device is connected to said energy bank, power converter stage and rechargeable device and the SCP device is adapted to limit a charging current from the power converter stage and/or the energy bank to the rechargeable device.

The charging current may need to be limited depending on the limitations of the rechargeable device. The SCP device is also used for security reasons for preventing the energy bank to accidently discharge all of its stored charge into e.g. a human body, if, for instance, the output accidently gets short-circuited (for instance touched by a finger).

The method for charging a rechargeable device may further comprise the step of:
- adapting the power converter stage to continue to charge the rechargeable device when the energy bank has discharged all of its stored energy.

The charging of the rechargeable device is thus continuous. The energy bank discharges all of its stored power into the rechargeable device at the same time that the power converter stage charges the rechargeable device and when the energy bank runs out, the power converter stage continues to charge.

### BRIEF DESCRIPTION OF THE DRAWINGS

Further objects, features, and advantages of the present invention will appear from the following detailed description of some embodiments of the invention, wherein some embodiments of the invention will be described in more detail with reference to the accompanying drawings, in which:
Fig. 1 shows a rechargeable device, in this case a mobile phone, being coupled to a charging device for charging its internal battery, according to an embodiment of the present invention.
Fig. 2 shows a block diagram of the main parts in a charging device according to an embodiment of the present invention.
Fig. 3 shows a block diagram of the main parts in a charging device according to a further embodiment of the present invention.
Fig. 4 shows a flowchart of the method of how to charge the rechargeable device with the charging device.
Fig. 5 shows a step of the flowchart in an embodiment of the present invention.
Fig. 6 shows another step of the flowchart in a further embodiment of the present invention.
Fig. 7 shows another step of the flowchart in a further embodiment of the present invention.
Fig. 8 shows another step of the flowchart in a further embodiment of the present invention.

### DETAILED DESCRIPTION

Embodiments of the present invention will be described more fully hereinafter with reference to the accompanying drawings, in which embodiments of the invention are shown. This invention may, however, be embodied in many different forms and should not be construed as limited to the embodiments set forth herein. Rather, these embodiments are provided so that this disclosure will be thorough and complete, and will fully convey the scope of the invention to those skilled in the art.

Embodiments of the present invention will be exemplified using a charging device for a rechargeable device and accessories thereof. However, it should be appreciated that the invention is as such equally applicable to any type of mobile communication device, mobile phone or any other device having rechargeable batteries. Examples of such devices may for instance be any type of hand-held navigation devices, laptops (such as standard, ultra portables, netbooks, micro laptops, and pads), handheld computers, PDAs, tablets, pads, gaming devices, accessories to mobile phones, etc. However, for the sake of clarity and simplicity, the embodiments outlined in this specification are exemplified with and related to mobile phones and accessories thereof only.

It is possible to charge the first 75-80% of a rechargeable battery quite fast during its constant current phase. When the charging phase switches to constant voltage, the possible charging current is greatly limited. So, when trying to reduce the charging time of a rechargeable device, the constant current phase is the phase which can be greatly improved. There is a need for a charger which reduces charge time and does not rely on complicated logic to function so that it is cheap to produce.

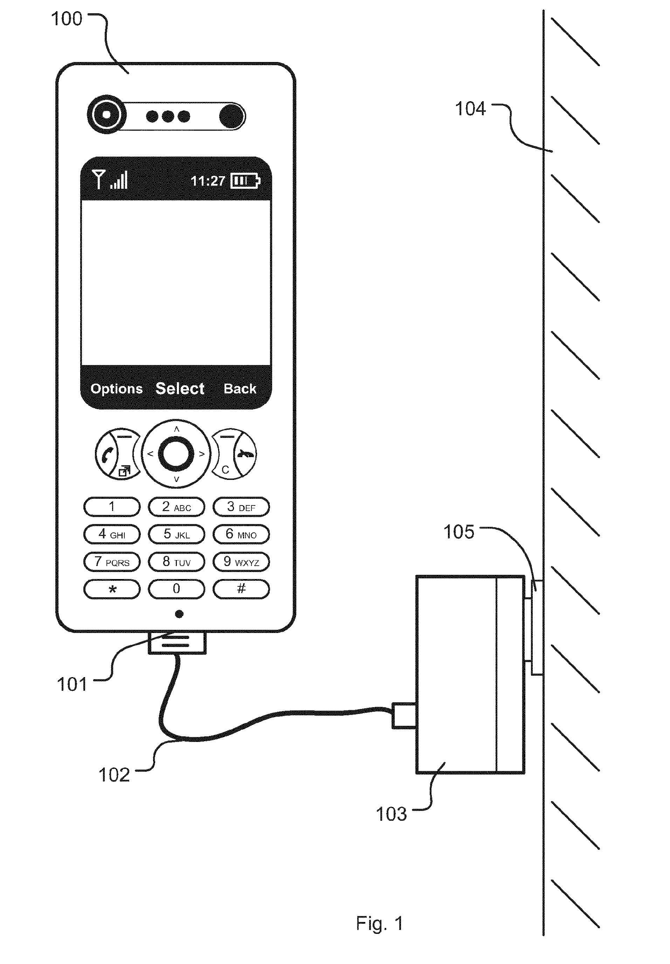

Fig. 1 shows a rechargeable device 100 connected (via a connector 101) via a power cord 102 to a charging device (a super charger) 103 which is plugged into a power outlet 105 in a wall 104; the power outlet being a power source for the charging device. The front side of the rechargeable device, in this case a mobile phone 100, comprises a casing, a display area, and means for navigating among items (not shown) displayed in the display area. The casing may be made of any type of casing material such as painted or not painted plastic, metal, glass, polymer material, or a combination thereof. The display area may comprise a status indication area and one or more soft key bars. The status indication area may for example include symbols for indicating internal battery status and/or charging status of the internal battery, reception quality, speaker on/off, present mode, time and date, etc. The rechargeable device 100 can also comprise other elements normally present in such a device, such as a keypad, a speaker, a microphone, a camera, a digital audio broadcast transmitter and receiver (not shown), a connector 101 for connecting a charging device 103 to the phone via, for instance, a power cord 102, etc.

The charging device 103 is connected to a connector 101 in the rechargeable device 100 via for instance a power cord 102, and the charging device 103 is connected to a standard power outlet 105 as power source situated in a wall 104 (wall socket). In this way a rechargeable battery in the rechargeable device may be re-charged.

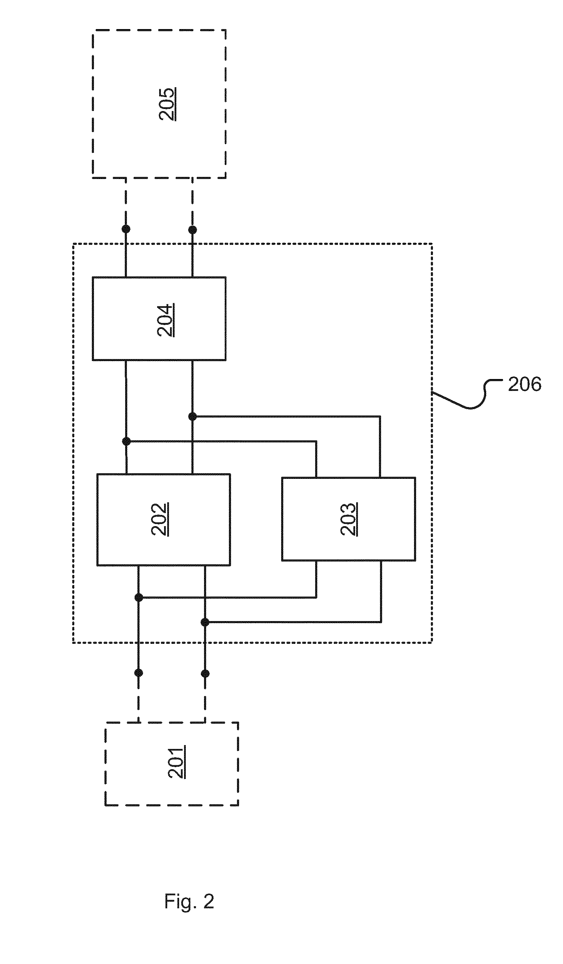

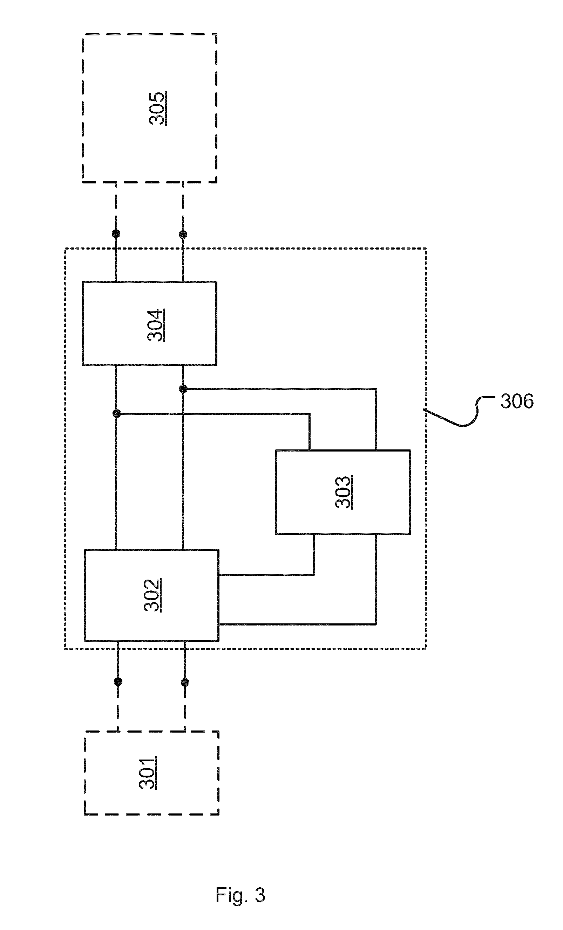

Figs. 2 and 3 show block diagrams of two embodiments of the present invention. The charging device 206, 306 comprises a power converter stage 202, 302 which is adapted to convert power from a power source 201, 301 to charge the rechargeable device 205, 305 when the rechargeable device is connected to the charging device. The charging device further comprises an energy bank 203, 303 adapted for fast charging of said rechargeable device.

The fast charging of the rechargeable device 205, 305 by the energy bank 203, 303 is independent but simultaneous to the charging of the rechargeable device by the power converter stage 202, 302. Hence, the energy bank 203, 303 and the power converter stage 202, 302 are both connected to the rechargeable device and may charge the device independent of each other. The effect of that the energy bank and the power converter stage independently but simultaneously charges the rechargeable device is that a charging boost is achieved. When the charging boost of the energy bank is applied to the rechargeable device in the low state-of-charge, i.e. the constant current phase, when the charge efficiency is higher, a faster charging of the rechargeable device is achieved.

Fig. 2 shows an embodiment of the present invention where the energy bank 203 is connected to the power source 201 so that the energy bank is charged by the power source. Depending on what kind of power source the energy bank is connected to, it might be possible to charge it directly from the power source.

Fig. 3 shows an embodiment of the present invention where the energy bank 303 is connected to the power converter stage 302 so that the energy bank is charged by the power converter stage. If the power from the power source 301 needs to be converted, e.g. from AC (Alternating Current) to DC (Direct Current), the energy bank is charged from the power converter stage. In the embodiment shown in Fig. 3, the energy bank is connected to the output side of the power converter stage.

When the charging device 206, 306 is plugged into a power source 201, 301 the power converter stage 202, 302, or the power source, depending on the embodiment, will immediately begin to charge the energy bank 203, 303. When the charging device is connected to a rechargeable device 205, 305, the power converter stage will start charging the rechargeable battery present in the rechargeable device and at the same time the energy bank will rapidly discharge its stored energy into the rechargeable battery of the rechargeable device. In this way the power converter stage and the energy bank cooperatively charges the rechargeable device.

The charging device 206, 306 according to Figs. 2 and 3 may further comprise a short-circuit protection device, SCP device 204, 304, connected to the energy bank 203, 303, power converter stage 202, 302 and rechargeable device 205, 305. The SCP device limits a charging current from the power converter stage and/or the energy bank to the rechargeable device. The charging current may need to be limited depending on the limitations of the rechargeable device. The SCP device may or may not to some extent regulate the maximum current flowing from the charging device to the rechargeable device. The SCP device is also used for security reasons for preventing the energy bank to accidently discharge all of its stored charge into e.g. a human body, if, for instance, the output accidently gets short-circuited (for instance touched by a finger).

The output of the SCP device 204, 304 is connected, often via a cord and a connector, to the rechargeable device 205, 305, such as a mobile phone having a rechargeable battery. The electronic logic controlling the charge process is often located in the rechargeable device and not in the charging device 206, 306. However in a variant the circuitry for regulating and controlling the charging of the rechargeable device may be present in the charging device (not shown in the figures).

According to one aspect of the invention, the power converter stage 202, 302 continues to charge the rechargeable device 205, 305 when the energy bank 203, 303 has discharged all of its stored energy. The charging of the rechargeable device is thus continuous. The energy bank discharges all of its stored power into the rechargeable device at the same time that the power converter stage charges the rechargeable device and when the energy bank runs out, the power converter stage continues to charge. In this way the energy bank will give a very fast energy boost to the rechargeable battery and thus charge it very fast (for instance under the whole constant current phase). Thus the empty battery in the rechargeable device is rapidly charged by the high charge current of the energy bank and thereafter a "normal" lower charge current is continuously provided by the power converter stage to load the remaining part in the rechargeable battery (for instance in the constant voltage phase). Thus, the rechargeable device will be very rapidly charged by the energy bank together with the power converter stage without having to use different charging phases (or switching between different charging phases, or charge circuits) and without having to switch between an energy bank and the charging current coming from the power converter stage, and thus simplifying the construction of the charging device significantly.

According to one aspect of the invention, the power converter stage 202, 302 is an AC-to-DC converter stage. If the power source is an AC-power source, the charging device needs to convert the power to DC for charging of the rechargeable device. The AC-to-DC converter stage is a standard module which is present in most charging devices and is more or less a cheap of-the-shelf item.

According to one aspect of the invention, the rechargeable device is a portable device, typically a mobile phone; though the charging device will work on any kind of portable device.

According to one aspect of the invention, the energy bank 203, 303 comprises any combination of: at least one high power battery, at least one high power battery and at least one super capacitor, or at least one super capacitor i.e. an electrochemical capacitor. The combination will depend on limits of the manufacturing cost and the desired efficiency.

The energy bank 203, 303 of the charging device 206, 306 may further comprise that the at least one high power battery is a rechargeable high power battery, typically a LFP (lithium-iron-phosphate) or LTO (lithium-tin-oxide) based battery which both has good discharge properties such as very flat discharge curves. If high power batteries are used in the energy bank (in combination with super capacitors or not), different types of high power batteries may be used together and in combination with each other for enhancement. A super capacitor is an electrochemical capacitor with relatively high energy density and is often referred to as an electric double-layer capacitor (EDLC), super condenser, electrochemical double layer capacitor, or ultra capacitor. Different battery and capacitor techniques may be mixed in said energy bank.

The charging device 206, 306 may further comprise that the energy bank 203, 303 is constructed to supply energy to provide to the rechargeable device 205, 305 through the whole constant current phase of the recharge. During the constant current phase the rechargeable device is susceptible to the energy boost from the energy bank so if the energy bank can store enough energy to supply the rechargeable device with power throughout the whole constant current phase, the charging of the rechargeable device is optimised in terms of charging speed. When the energy bank is fully discharged the power converter stage 202, 302 continues to recharge the rechargeable battery in the constant voltage phase.

According to one aspect of the invention, the energy bank 203, 303 can be used to make the charger a "zero-power" type by disconnecting the power source. The charging device can then be used as an emergency charger or a charger to bring when traveling and there is no power source to come by. If the charging device is connected to a power source without connecting a rechargeable device, the energy bank in the charging device charges and can later be used to boost the charge of a rechargeable device without a power source.

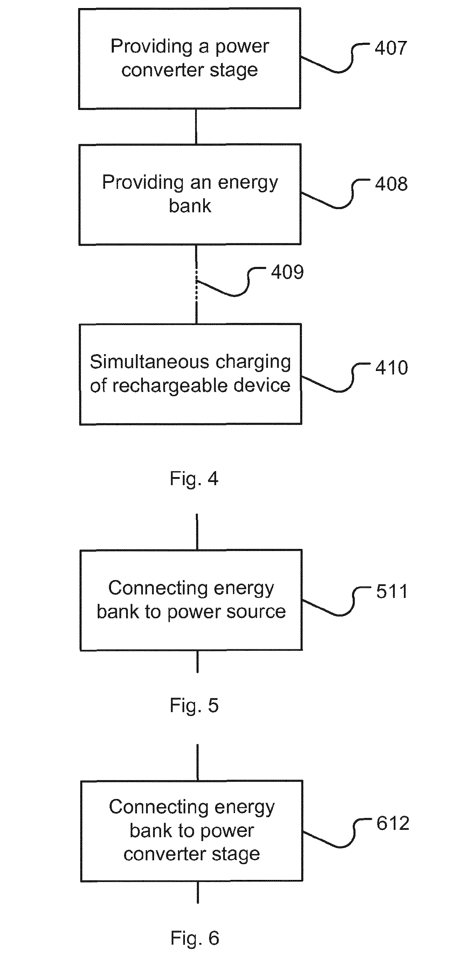

Fig. 4 shows a flowchart of the method for charging a rechargeable device by means of a charging device, comprising the steps of:
- Providing a power converter stage 407 to the charging device which is adapted to convert power from a power source to charge said rechargeable device when the rechargeable device is connected to the charging device.
- Providing an energy bank 408 to the charging device, adapted for fast charging of said rechargeable device.
- Charging the rechargeable device, wherein the charging by the energy bank is independent but simultaneous to the charging of the rechargeable device by the power converter stage 410.

The effect of that the energy bank and the power converter stage independently but simultaneously charges the rechargeable device is that a charging boost is achieved. When the charging boost of the energy bank is applied to the rechargeable device in the low state-of-charge, when the charge efficiency is higher, a faster charging of the rechargeable device is achieved. These effects have previously been discussed more closely.

Fig. 5 shows an embodiment of the present invention with an additional step of the method in the flowchart of Fig. 4:
- Connecting the energy bank to the power source 511 so that the energy bank is charged by the power source. This step is to be inserted at the dotted line 409 in Fig. 4.

Depending on what kind of power source the energy bank is connected to, it might be possible to charge it directly from the power source.

Fig. 6 shows an embodiment of the present invention with an additional step of the method in the flowchart of Fig. 4:
- Connecting the energy bank to the power converter stage 612 so that the energy bank is charged by the power converter stage. This step is to be inserted at the dotted line 409 in Fig. 4.

If the power from the power source needs to be converted, e.g. from AC (Alternating Current) to DC (Direct Current), the energy bank is charged from the power converter stage.

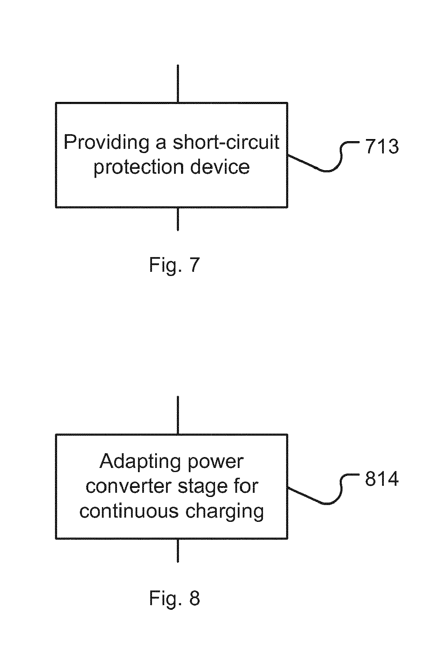

Fig. 7 shows an embodiment of the present invention with an additional step of the method in the flowchart of Fig. 4:
- Providing a short-circuit protection device 713, SCP device, to the charging device. The SCP device is connected to said energy bank, power converter stage and rechargeable device and the SCP device is adapted to limit a charging current from the power converter stage and/or the energy bank to the rechargeable device. This step is to be inserted at the dotted line 409 in Fig. 4.

The charging current may need to be limited depending on the limitations of the rechargeable device. The SCP device is also used for security reasons for preventing the energy bank to accidently discharge all of its stored charge into e.g. a human body, if, for instance, the output accidently gets short-circuited (for instance touched by a finger).

Fig. 8 shows an embodiment of the present invention with an additional step of the method in the flowchart of Fig. 4:
- Adapting the power converter stage to continue to charge the rechargeable device 814 when the energy bank has discharged all of its stored energy. This step is to be inserted at the dotted line 409 in Fig. 4.

The charging of the rechargeable device is thus continuous. The energy bank discharges all of its stored power into the rechargeable device at the same time that the power converter stage charges the rechargeable device and when the energy bank runs out of energy, the power converter stage continues to charge.

By fitting a standard charging device 103, 206, 306 with an energy bank 203, 303 according to above a "high power charger"/"super charger" can be designed with significantly less copper, smaller size and higher charge efficiency.

Yet another benefit with the charging device 103, 206, 306 according to the embodiments above is that the energy in the energy bank 203, 303 may be used without connecting the charging device into the power outlet as an in-case-of-emergency charger emptying the charge stored in the energy bank into a rechargeable battery.

The terminology used herein is for the purpose of describing particular embodiments only and is not intended to be limiting of the invention. As used herein, the singular forms "a", "an" and "the" are intended to include the plural forms as well, unless the context clearly indicates otherwise. It will be further understood that the terms "comprises" "comprising," "includes" and/or "including" when used herein, specify the presence of stated features, integers, steps, operations, elements, and/or components, but do not preclude the presence or addition of one or more other features, integers, steps, operations, elements, components, and/or groups thereof.

Unless otherwise defined, all terms (including technical and scientific terms) used herein have the same meaning as commonly understood by one of ordinary skill in the art to which this invention belongs. It will be further understood that terms used herein should be interpreted as having a meaning that is consistent with their meaning in the context of this specification and the relevant art and will not be interpreted in an idealized or overly formal sense unless expressly so defined herein.

The foregoing has described the principles, preferred embodiments and modes of operation of the present invention. However, the invention should be regarded as illustrative rather than restrictive, and not as being limited to the particular embodiments discussed above. The different features of the various embodiments of the invention can be combined in other combinations than those explicitly described. It should therefore be appreciated that variations may be made in those embodiments by those skilled in the art without departing from the scope of the present invention as defined by the following claims.

## Claims

1. A charging device (103, 206, 306) for charging a rechargeable device (100, 205, 305), comprising:
a power converter stage (202, 302), adapted to convert power from a power source (201, 301) to charge said rechargeable device when the rechargeable device is connected to the charging device; and
an energy bank (203, 303) adapted for fast charging of said rechargeable device, **characterized in that** said charging by the energy bank is independent but simultaneous to the charging of the rechargeable device by the power converter stage.

2. A charging device according to claim 1, wherein the energy bank is connected to the power source so that the energy bank is charged by the power source.

3. A charging device according to claim 1, wherein the energy bank is connected to the power converter stage so that the energy bank is charged by the power converter stage.

4. A charging device according to any of the preceding claims, wherein the charging device further comprises a short-circuit protection device, SCP device, (204, 304) connected to said energy bank, power converter stage and rechargeable device, wherein the SCP device limits a charging current from the power converter stage and/or the energy bank to the rechargeable device.

5. A charging device according to any of the preceding claims, wherein the power converter stage continues to charge the rechargeable device when the energy bank has discharged all of its stored energy.

6. A charging device according to any of the preceding claims, wherein the power converter stage is an AC-to-DC converter stage.

7. A charging device according to any of the preceding claims, wherein the rechargeable device is a portable device.

8. A charging device according to any of the preceding claims, wherein the energy bank comprises any combination of: at least one high power battery, at least one high power battery and at least one super capacitor, or at least one super capacitor i.e. an electrochemical capacitor.

9. A charging device according to claim 8, wherein the at least one high power battery is a rechargeable high power battery, typically a LFP (lithium-iron-phosphate) or LTO (lithium-tin-oxide) based battery.

10. A method for charging a rechargeable device (100, 205, 305) by means of a charging device (103, 206, 306), comprising the steps of:
- providing a power converter stage (407) to the charging device, adapted to convert power from a power source to charge said rechargeable device when the rechargeable device is connected to the charging device; and
- providing an energy bank (408) to the charging device, adapted for fast charging of said rechargeable device, **characterized in that** said charging by the energy bank is independent but simultaneous (410) to the charging of the rechargeable device by the power converter stage.

11. A method for charging a rechargeable device according to claim 10, wherein method further comprises the step of:
- connecting the energy bank to the power source (511) so that the energy bank is charged by the power source.

12. A method for charging a rechargeable device according to claim 10, wherein method further comprises the step of:
- connecting the energy bank to the power converter stage (612) so that the energy bank is charged by the power converter stage.

13. A method for charging a rechargeable device according to any of claims 10 to 12, wherein method further comprises the step of:
- providing a short-circuit protection device, SCP device, (713) to the charging device, connected to said energy bank, power converter stage and rechargeable device, wherein the SCP device is adapted to limit a charging current from the power converter stage and/or the energy bank to the rechargeable device.

14. A method for charging a rechargeable device according to any of claims 10 to 13, method further comprises the step of:
- adapting the power converter stage to continue to charge (814) the rechargeable device when the energy bank has discharged all of its stored energy.
